# EUROPÄISCHE PATENTSCHRIFT

(11) **EP 3 856 466 B1**
(45) Veröffentlichungstag und Bekanntmachung des Hinweises auf die Patenterteilung: **04.06.2025**
(21) Anmeldenummer: 19772719.1
(22) Anmeldetag: 19.09.2019
(51) Int. Cl.: B25J 9/16

(54) **VERFAHREN ZUR ABSICHERUNG EINES ARBEITSBEREICHS EINES MOBILEN LOGISTIK-ROBOTERS MITTELS ADAPTIVER SCHUTZFELDER**
METHOD FOR SAFEGUARDING THE WORK AREA OF A MOBILE LOGISTICS ROBOT USING ADAPTIVE PROTECTION ZONES
PROCÉDÉ DE SÉCURISATION D'UNE ZONE DE TRAVAIL D'UN ROBOT LOGISTIQUE MOBILE AU MOYEN DE CHAMPS DE PROTECTION ADAPTATIFS

(30) Priorität: 28.09.2018 DE 102018007724; 22.10.2018 DE 102018126216
(43) Veröffentlichungstag der Anmeldung: 04.08.2021
(73) Patentinhaber: STILL GmbH, 22113 Hamburg (DE)
(72) Erfinder: SCHÜTHE, Dennis, 21255 Tostedt (DE); BENGT, Abel, 21335 Lüneburg (DE); KÖNIG, Ralf, 21365 Adendorf (DE)
(74) Vertreter: Patentship Patentanwaltgesellschaft
(86) Internationale Anmeldenummer: PCT/EP2019/075122
(87) Internationale Veröffentlichungsnummer: WO 2020/064490

(56) Entgegenhaltungen:
- DE-A1- 102010 007 025
- DE-A1- 102015 220 495
- DE-U1- 202017 103 611

## Beschreibung

Die Erfindung betrifft ein Verfahren zur Absicherung eines Arbeitsbereichs eines mobilen Logistik-Roboters in wechselnden Arbeitsumgebungen, wobei der Logistik-Roboter von einem Steuerungssystem gesteuert wird, und die aktuelle Arbeitsumgebung mittels eines Sensorsystems erfasst und von einem Sicherheitssystem überwacht wird, wobei das Steuerungssystem einen beabsichtigten, sicheren Arbeitsbereich in einer neuen Arbeitsumgebung autonom definiert, und das Sicherheitssystem den definierten Arbeitsbereich als freies Schutzfeld autonom verifiziert und überwacht, und bei einer Schutzfeldverletzung durch Eintritt eines Objekts in das freie Schutzfeld der Logistik-Roboter automatisch in einen sicheren Zustand versetzt wird.

Aus der DE 20 2017 103 611 U1 ist eine Vorrichtung zur Sicherheitssteuerung einer Maschine bekannt.

Aus der DE 10 2015 220 495 A1 ist ein gattungsgemäßes Verfahren mit den Merkmalen des Oberbegriffs des Patentanspruchs 1 bekannt.

Roboter kommen vermehrt in der Industrie und in Logistikbetrieben zum Einsatz, um Abläufe in der industriellen Fertigung und bei logistischen Aufgaben, beispielsweise bei der Kommissionierung, zu automatisieren. Meist werden dabei Roboter mit Armmanipulatoren, insbesondere Roboterarmen, eingesetzt. Ein Beispiel hierfür sind so genannte Knickarmroboter.

Robotische Anwendungen von Armmanipulatoren werden in heutiger industrieller Automation in der Regel in separierten Arbeitsräumen betrieben, die in der Regel als sensorisch überwachte Sicherheitskäfige ausgebildet sind. Als aktuelle Weiterentwicklung finden sich im Stand der Technik erste kollaborative Roboterkonzepte, bei denen Menschen und Roboter in derselben Arbeitsumgebung arbeiten. Aus Sicherheitsgründen ist bei solchen Roboterkonzepten allerdings die Arbeitsgeschwindigkeit stark eingeschränkt. Die so genannte kollaborative Geschwindigkeit beträgt typischerweise maximal 250mm/s. Außerdem weisen solche Roboterkonzepte aufgrund der Notwendigkeit von sicherheitsrelevanter Kraft- und Momentensensorik sehr hohe Produktkosten auf. Darüber hinaus können häufig nur sehr geringe Nutzlasten (im unteren Kilogramm-Bereich) gehoben werden, so dass sich ein ungünstiges Nutzlast-zu-Eigenlast-Verhältnis einstellt.

Der überwiegende Teil der heutigen robotischen Lösungen lässt sich als stationäre robotische Lösung charakterisieren, da der Roboterarm entweder fest auf dem Boden verankert oder verfahrbar auf einer Linearachse montiert ist. Somit ergibt sich ein räumlich stark eingeschränkter Arbeitsraum, der üblicherweise durch einen Sicherheitszaun abgetrennt ist.

Es gibt erste mobile Ansätze mit Roboterarmen auf frei fahrbaren Plattformen. Beispiele hierfür sind flache autonom fahrende Fahrzeuge ("automated guided vehicles", AGVs) oder auch fahrerlose Flurförderzeuge, insbesondere mobile Kommissionierroboter. In der Regel sind diese Lösungen aber nicht im gemischten Betrieb ohne räumliche Separierung von menschlichen Bedienern einsetzbar.

Als Abwandlung von fest installierten Sicherheitszäunen finden sich erste Ansätze von virtuellen Schutzzäunen, bei denen mittels geeigneter Sensoren (z. B. Laserscanner) der freie Bereich um den Roboter herum überwacht wird. Bei Verletzung des durch den virtuellen Schutzzaun festgelegten Schutzfeldes wird der Roboter sicher begrenzt bzw. abgeschaltet.

Durch die räumliche Separierung von Roboter und Menschen entsteht eine hemmende Barriere für den Einsatz von kollaborativen Bedienkonzepten mit einer Mensch-Roboter-Kollaboration. Ein Mischbetrieb in parallel von Menschen und Robotern genutzten Bereichen ist auch bei mobilen robotischen Einheiten, die beispielsweise auf beweglichen Plattformen montiert sind, häufig nicht möglich. Konzepte mit anwendungsangepassten Kinematiken, bei denen die Gefahrenvermeidung durch die Formgebung des Roboter-Gehäuses realisiert wird, schränken den Gestaltungsspielraum der Kinematik stark ein.

Als Folge dieser Hemmnisse zeigen sich für die bekannten kollaborativen Roboterkonzepte, bedingt durch ihre Charakteristika, nur sehr eingeschränkte Einsatzfelder. Sie erzielen daher bislang nur eine extrem geringe Marktdurchdringung.

Besonders anspruchsvoll ist die Verwirklichung kollaborativer Konzepte bei Logistik-Robotern, insbesondere autonomen Flurförderzeugen mit Roboterarmen zur Lasthandhabung, z.B. mobilen Kommissionierrobotern, weil sich Logistik-Roboter frei in einem Logistikbereich, z.B. einer Lagerhalle, bewegen sollen. Dabei treffen sie ständig auf völlig neue Arbeitsumgebungen, die abgesichert werden müssen.

Der vorliegenden Erfindung liegt die Aufgabe zugrunde, ein Verfahren der eingangs genannten Art so auszugestalten, dass ein sicherer Betrieb eines mobilen, freiverfahrbaren Logistik-Roboters auch bei wechselnden Arbeitsumgebungen im Mischbetrieb mit Menschen ermöglicht wird.

Die Erfindung ist im Patentanspruch 1 definiert.

Das erfindungsgemäße Verfahren ist somit in der Lage, für eine neue Arbeitsumgebung einen sicheren Schutzfeldbereich autonom zu erkennen und diesen über das Sicherheitssystem überwachen zu lassen. Im Gegensatz zu herkömmlichen, fest installierten Sicherheitszäunen und fest eingestellten virtuellen Schutzzäunen können die adaptiven Schutzfelder gemäß der Erfindung laufend an unterschiedliche Arbeitsumgebungen angepasst werden.

Das Steuerungssystem kann eine mathematische Beschreibung des definierten Arbeitsbereichs an das Sicherheitssystem übergeben.

Von Vorteil ist dabei, dass das elektronische Steuerungssystem des Logistik-Roboters selbst nicht sicher zu sein braucht. Es kann also beispielsweise eine herkömmliche Roboterarm-Steuerung verwendet werden. Die Absicherung erfolgt über das Sicherheitssystem, das als eigenes elektronisches Sicherheits-Steuerungssystem ausgelegt sein kann.

Zweckmäßigerweise scannt das nicht sichere Steuerungssystem mit Hilfe von Sensoren die Arbeitsumgebung und definiert den beabsichtigen, sicheren Arbeitsbereich. Anschließend übergibt das nicht sichere Steuerungssystem den beabsichtigten sicheren Arbeitsbereich als mathematische Beschreibung (vorzugsweise als Polygon) an das Sicherheitssystem, das diese Definition für seine, vorzugsweise als Scanner ausgebildeten, Sicherheitssensoren übernimmt. Dabei kann es sich auch um dieselben Sensoren handeln wie beim Scannen der Arbeitsumgebung durch das nicht sichere Steuerungssystem. Das Sicherheitssystem bestätigt, dass das Schutzfeld frei (also nicht okkupiert) ist.

Das Steuerungssystem wählt aus einem vordefinierten Satz von Schutzfeldern das Schutzfeld aus, das den beabsichtigten, sicheren Arbeitsbereich abdeckt.

Auch hier scannt das nicht sichere Steuerungssystem mit Hilfe von Sensoren die Arbeitsumgebung und wählt aus dem vordefinierten Satz von Schutzfeldern das Schutzfeld aus, das den beabsichtigten, sicheren Arbeitsbereich abdeckt und die erkannte Kontur des beabsichtigen, sicheren Arbeitsbereichsbereich in geeigneter Weise erfüllt. Anschließend übergibt das nicht sichere Steuerungssystem den beabsichtigten sicheren Arbeitsbereich an das Sicherheitssystem, das diese Definition für seine, vorzugsweise als Scanner ausgebildeten, Sicherheitssensoren übernimmt. Dabei kann es sich auch um dieselben Sensoren handeln wie beim Scannen der Arbeitsumgebung durch das nicht sichere Steuerungssystem. Das Sicherheitssystem bestätigt, dass das Schutzfeld frei (also nicht okkupiert) ist.

Auch hierfür kann ein nicht sicheres Steuerungssystem verwendet werden. Das nicht sichere Steuerungssystem wählt aus einem vordefinierten Satz an Schutzfeldern das Schutzfeld aus, das die erkannte Kontur des beabsichtigten Arbeitsbereichs in geeigneter Weise erfüllt. Die Kontur der Schutzfelder kann hierbei beliebig sein. Ohne Beschränkung der Allgemeinheit kann insbesondere von rechteckigen Schutzfeldern ausgegangen werden.

Der oben dargestellte Ansatz sieht insbesondere ein Steuerungssystem bestehend aus einem nicht sicheren Steuerungssystem, beispielsweise einer Robotiksteuerung und einem (überwachenden) Sicherheitssystem vor. Diese Teilung ist zielführend, da sichere Steuerungssysteme in der Regel über einen sehr beschränkten Funktionsumfang verfügen und somit komplexere Algorithmen hierin nicht abbildbar sind.

Die nachfolgend dargestellte Variante reduziert die algorithmische Komplexität, so dass das erfindungsgemäße Verfahren auch auf einem einfacher strukturierten, sicheren Steuerungssystem umsetzbar ist.

Anstelle des Scannens der Arbeitsumgebung, um ein geeignetes Schutzfeld definieren zu können, sieht die Vereinfachung vor, dass ein fest definierter Satz von Schutzfeldern durch das Sicherheitssystem iterativ auf die wechselnde Arbeitsumgebung angewendet wird.

Demnach betrifft die Erfindung ein Verfahren, bei dem das Steuerungssystem einen vordefinierten Satz von Schutzfeldern iterativ auf die Arbeitsumgebung anwendet, wobei folgender Algorithmus verwendet wird:
1. Auswahl eines kleinen Schutzfelds i,
2. Verifikation durch das Sicherheitssystem, ob das Schutzfeld i frei ist,
   2.1 bei Verifikation als freies Schutzfeld i: Fortsetzung mit 3. Schritt,
   2.2 bei Verifikation als besetztes Schutzfeld: Abbruch,
3. Auswahl eines nächst größeren Schutzfelds i,
4. Fortsetzung mit 2. Schritt,
5. Definition des größtmöglichen Schutzfelds als das zuletzt als freies Schutzfeld verifiziertes Schutzfeld i-1.

Zweckmäßigerweise umfasst dabei der vordefinierte Satz von Schutzfeldern rechteckige Schutzfelder. Je nach Beschaffenheit der Arbeitsumgebung kann er aber auch auf andere Art geeignet geformte Schutzfelder aufweisen.

Gemäß der Erfindung wird das freie Schutzfeld so nah an eine begrenzende Kontur des Arbeitsbereichs gelegt, dass sich keine Person im Zwischenraum aufhalten kann.

Die Erfindung sieht also vor, dass das Schutzfeld sehr nah an die begrenzende Kontur gelegt wird. Hierdurch verbleibt nur ein kleiner nicht überwachter Bereich. Gemäß bestehender Normen muss der nicht überwachte Bereich so gewählt sein, dass sich keine Person in ihm aufhalten kann. Mit der Erfindung wird diese Forderung dadurch erfüllt, dass das adaptive Schutzfeld so definiert wird, dass der nicht überwachte Schutzraum unterhalb der in der Norm gegebenen Grenze bleibt.

Dabei wird das freie Schutzfeld vorzugsweise so nah an eine begrenzende Kontur des Arbeitsbereichs gelegt, dass zwischen freiem Schutzfeld und begrenzender Kontur ein Abstand von höchstens 10 cm verbleibt.

Mit dem erfindungsgemäßen Verfahren kann ein zusammenhängendes, lückenfreies Schutzfeld erstellt und verifiziert werden, welches sich mittels eines Kurvenzugs begrenzen lässt, der vorzugsweise durch ein Polygon vorgegeben ist. In einer weiteren Ausgestaltung der Erfindung werden mehrere freie Schutzfelder kombiniert. Dadurch entsteht ein nicht-zusammenhängendes Schutzfeld, das somit auch Lücken aufweisen kann.

In einer praxisgerechten Ausführungsform der Erfindung definiert das Steuerungssystem den beabsichtigten, sicheren Arbeitsbereich durch Auswertung der Sensordaten. Hierzu scannt vorzugsweise mindestens ein als Scanner ausgebildeter Sensor die Arbeitsumgebung. Zweckmäßigerweise wird dabei als Sensor ein Laserscanner verwendet.

Ein bevorzugter Anwendungsfall der Erfindung sieht vor, dass als Logistik-Roboter ein mobiles, frei-verfahrbares robotisches Fahrzeug, insbesondere ein autonomes Flurförderzeug, mit mindestens einem Roboterarm zur Lasthandhabung in einer wechselnden Arbeitsumgebung verwendet wird, wobei das Steuerungssystem zumindest den Roboterarm steuert.

Dabei wird mit Vorteil als Steuerungssystem ein nicht-sicheres Steuerungssystem verwendet, dessen Steuerungsmaßnahmen vom Sicherheitssystem überwacht werden.

Eine andere zweckmäßige Variante der Erfindung sieht vor, dass als Steuerungssystem ein sicheres Steuerungssystem verwendet wird, in das das Sicherheitssystem integriert ist.

Die Erfindung bietet eine Reihe von Vorteilen:

Es können Arbeitsfelder ohne feste Schutzfeldabtrennung erschlossen werden.

Außerdem kann die Arbeitsgeschwindigkeit erhöht werden, da der Roboter mit "nichtkollaborativer" Geschwindigkeit bewegt werden kann. Darüber hinaus können erhöhte Nutzlasten gehandhabt werden, da keine permanente Kraft- und Momentenüberwachung des Roboters notwendig ist und somit größere Nutzlasten mit erhöhter Geschwindigkeit bewegt werden können, die oberhalb der Überwachungsgrenzen liegen. Auch die Kosten für die Sensorik können reduziert werden, da keine Kollisionsüberwachung durch robotermontierte Sensorik notwendig ist. Schließlich können ebenso die Kosten für den Roboterarm verringert werden, da Standard-Industrieroboter anstelle kostenintensiver kollaborativer Roboter eingesetzt werden können.

Weitere Vorteile und Einzelheiten der Erfindung werden anhand der in den schematischen Figuren dargestellten Ausführungsbeispiele näher erläutert. Hierbei zeigen
- Figur 1: die Definition eines Schutzfeldes in einer adaptiv abgesicherten Arbeitsumgebung,
- Figur 2: einen Satz vordefinierter Schutzfelder in einer adaptiv abgesicherten Arbeitsumgebung, und
- Figur 3: die Auswahl der maximalen, nicht-okkupierten Schutzfelder zur Absicherung der Arbeitsumgebung des Roboters.

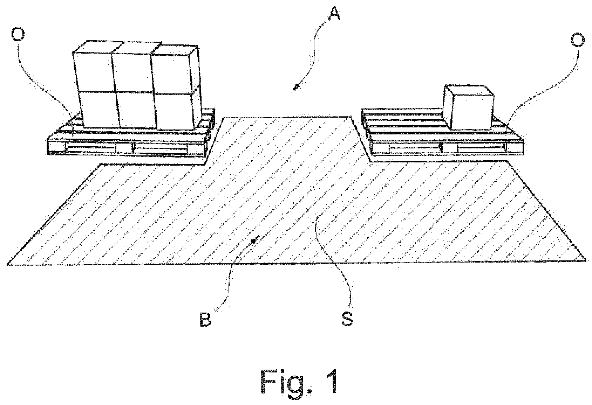

In Figur 1 ist die Definition eines Schutzfeldes S in einer adaptiv abgesicherten Arbeitsumgebung A dargestellt. Im vorliegenden Beispiel ist das Schutzfeld S über ein Polygon S definiert. Hierzu scannt ein nicht sichere Steuerungssystem des in der Figur 1 nicht dargestellten Logistik-Roboters mit Hilfe von Sensoren die Arbeitsumgebung A und definiert den beabsichtigen, sicheren Arbeitsbereich B. Wie in der Figur 1 dargestellt, wird ein Arbeitsbereich B gewählt, der nicht von Objekten O, in diesem Fall von Paletten O, belegt ist. Anschließend übergibt das nicht sichere Steuerungssystem den beabsichtigten sicheren Arbeitsbereich B als mathematische Beschreibung (hier als Polygon S) an ein Sicherheitssystem, das diese Definition für seine, insbesondere als Scanner ausgebildeten, Sicherheitssensoren übernimmt. Das Sicherheitssystem bestätigt, dass das Schutzfeld S frei (nicht okkupiert) ist.

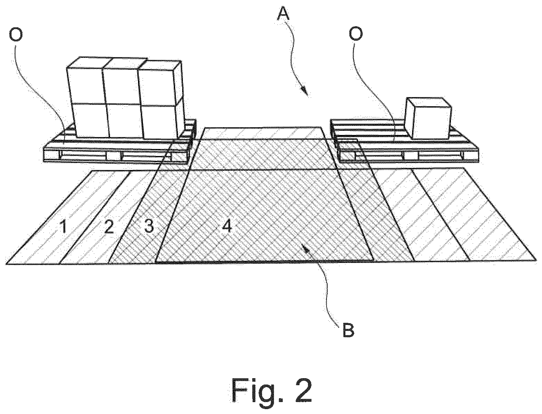

In Figur 2 ist ein Satz vordefinierter Schutzfelder 1, 2, 3, 4 gezeigt. Dabei besitzen die Schutzfelder 1, 2, 3, 4 beispielsweise die Form von Rechtecken. Hierzu scannt ein nicht sichere Steuerungssystem des in der Figur 2 nicht dargestellten Logistik-Roboters mit Hilfe von Sensoren die Arbeitsumgebung A und definiert den beabsichtigen, sicheren Arbeitsbereich B. Die Schutzfelder 1, 2, 4 sind frei, also nicht okkupiert, während das Schutzfeld 3 durch Objekte O, in diesem Fall von Paletten O, okkupiert ist. Das nicht sichere Steuerungssystem des in der Figur 2 nicht dargestellten Logistik-Roboters wählt aus dem vordefinierten Satz an Schutzfeldern 1, 2, 3, 4 die Schutzfelder 1, 2, 4 aus, die die erkannte Kontur des beabsichtigten Arbeitsbereichs B in geeigneter Weise erfüllen. Anschließend übergibt das nicht sichere Steuerungssystem die nicht okkupierten Schutzfelder 1, 2, 4 an ein Sicherheitssystem, das diese für seine, insbesondere als Scanner ausgebildeten, Sicherheitssensoren übernimmt. Das Sicherheitssystem bestätigt, dass die Schutzfelder 1, 2, 4 frei (nicht okkupiert) ist.

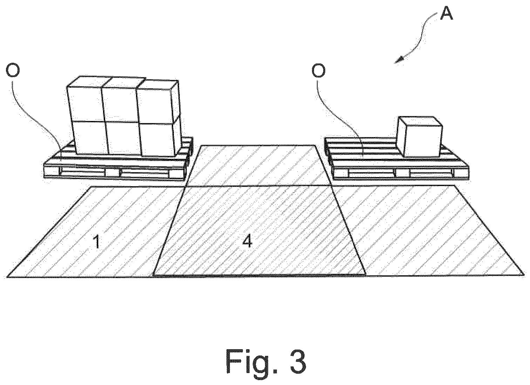

Die Figur 3 zeigt, wie mittels eines iterativen Verfahrens die maximalen, nicht-okkupierten Schutzfelder 1, 4 ausgewählt werden. Dabei wendet das Steuerungssystem des in der Figur 3 nicht dargestellten Logistik-Roboters einen vordefinierten Satz von Schutzfeldern iterativ auf die Arbeitsumgebung A an. Im vorliegenden Beispiel handelt es sich um denselben Satz von Schutzfeldern 1, 2, 3, 4 wie in Figur 2, wobei in Figur 3 nur das Ergebnis des iterativen Verfahrens gezeigt ist. Zunächst wird ein kleines Schutzfeld gewählt wird. Durch das Sicherheitssystem wird verifiziert, ob das Schutzfeld frei ist. Trifft dies zu, wird das nächst größere Schutzfeld gewählt. Diese Prozedur wird solange fortgesetzt, bis das größtmögliche Schutzfeld als das zuletzt als freies Schutzfeld verifiziertes Schutzfeld definiert ist. Im vorliegenden Beispiel handelt es sich dabei um die Schutzfelder 1 und 4, die nicht durch die Objekte O, hier die Paletten O, okkupiert sind.

## Patentansprüche

1. Verfahren zur Absicherung eines Arbeitsbereichs (B) eines mobilen Logistik-Roboters in wechselnden Arbeitsumgebungen (A), wobei der Logistik- Roboter von einem Steuerungssystem gesteuert wird, und die aktuelle Arbeitsumgebung (A) mittels eines Sensorsystems erfasst und von einem Sicherheitssystem überwacht wird, wobei das Steuerungssystem einen beabsichtigten, sicheren Arbeitsbereich (B) in einer neuen Arbeitsumgebung (A) autonom definiert, und das Sicherheitssystem den definierten Arbeitsbereich (B) als freies Schutzfeld (S, 1, 2, 3, 4) autonom verifiziert und überwacht, und bei einer Schutzfeldverletzung durch Eintritt eines Objekts (O) in das freie Schutzfeld (S, 1, 2, 3, 4) der Logistik-Roboter automatisch in einen sicheren Zustand versetzt wird, **dadurch gekennzeichnet, dass** das Steuerungssystem einen vordefinierten Satz von Schutzfeldern (S, 1, 2, 3, 4) iterativ auf die Arbeitsumgebung (A) anwendet, wobei folgender Algorithmus verwendet wird:
1) Auswahl eines kleinen Schutzfelds i,
2) Verifikation durch das Sicherheitssystem, ob das Schutzfeld i frei ist,
2a) bei Verifikation als freies Schutzfeld i: Fortsetzung mit Schritt 3),
2b) bei Verifikation als besetztes Schutzfeld: Abbruch,
3) Auswahl eines nächst größeren Schutzfelds i,
4) Fortsetzung mit Schritt 2),
5) Definition des größtmöglichen Schutzfelds als das zuletzt als freies Schutzfeld verifiziertes Schutzfeld i-1,
und dass das freie Schutzfeld (S, 1, 2, 3, 4) so nah an eine begrenzende Kontur des Arbeitsbereichs (B) gelegt wird, dass sich keine Person im Zwischenraum aufhalten kann.

2. Verfahren nach Anspruch 1e, **dadurch gekennzeichnet, dass** der vordefinierte Satz von Schutzfeldern (S, 1, 2, 3, 4) rechteckige Schutzfelder (S, 1, 2, 3, 4) umfasst.

3. Verfahren nach Anspruch 1 oder 2, **dadurch gekennzeichnet, dass** das freie Schutzfeld (S, 1, 2, 3, 4) so nah an eine begrenzende Kontur des Arbeitsbereichs (B) gelegt wird, dass zwischen freiem Schutzfeld (S, 1, 2, 3, 4) und begrenzender Kontur ein Abstand von höchstens 10 cm verbleibt.

4. Verfahren nach einem der Ansprüche 1 bis 3, **dadurch gekennzeichnet, dass** mehrere freie Schutzfelder (S, 1, 2, 3, 4) kombiniert werden.

5. Verfahren nach einem der Ansprüche 1 bis 4, **dadurch gekennzeichnet, dass** das Steuerungssystem den beabsichtigten, sicheren Arbeitsbereich (B) durch Auswertung der Sensordaten definiert.

6. Verfahren nach einem der Ansprüche 1 bis 5, **dadurch gekennzeichnet, dass** mindestens ein als Scanner ausgebildeter Sensor die Arbeitsumgebung (A) scannt.

7. Verfahren nach Anspruch 6, **dadurch gekennzeichnet, dass** als Sensor ein Laserscanner verwendet wird.

8. Verfahren nach einem der Ansprüche 1 bis 7, **dadurch gekennzeichnet, dass** als Logistik-Roboter ein mobiles robotisches Fahrzeug, insbesondere ein autonomes Flurförderzeug, mit mindestens einem Roboterarm zur Lasthandhabung in einer wechselnden Arbeitsumgebung (A) verwendet wird, wobei das Steuerungssystem zumindest den Roboterarm steuert.

9. Verfahren nach einem der Ansprüche 1 bis 8, **dadurch gekennzeichnet, dass** als Steuerungssystem ein nicht-sicheres Steuerungssystem verwendet wird, dessen Steuerungsmaßnahmen vom Sicherheitssystem überwacht werden.

10. Verfahren nach einem der Ansprüche 1 bis 8, **dadurch gekennzeichnet, dass** als Steuerungssystem ein sicheres Steuerungssystem verwendet wird, in das das Sicherheitssystem integriert ist.

## Claims

1. Method for safeguarding the work area (B) of a mobile logistics robot in changing work environments (A), wherein the logistics robot is controlled by a control system, and the current work environment (A) is detected by means of a sensor system and is monitored by a safety system, wherein the control system autonomously defines an intended, safe work area (B) in a new work environment (A), and the safety system autonomously verifies the defined work area (B) as a free protection zone (S, 1, 2, 3, 4) and monitors it, and, in the event of a breach of the protection zone by an object (O) entering the free protection zone (S, 1, 2, 3, 4), the logistics robot is automatically moved to a safe state, **characterized in that** the control system iteratively applies a predefined set of protection zones (S, 1, 2, 3, 4) to the work environment (A), wherein the following algorithm is used:
1) selection of a small protection zone i,
2) verification by the safety system as to whether the protection zone i is free,
2a) upon verification as a free protection zone i: continue with step 3),
2b) upon verification as an occupied protection zone: abort,
3) selection of a next larger protection zone i,
4) continue with step 2),
5) definition of the largest possible protection zone as the protection zone i-1 last verified as a free protection zone,
and **in that** the free protection zone (S, 1, 2, 3, 4) is placed so close to a delimiting contour of the work area (B) that a person cannot fit in the gap.

2. Method according to Claim 1, **characterized in that** the predefined set of protection zones (S, 1, 2, 3, 4) comprises rectangular protection zones (S, 1, 2, 3, 4).

3. Method according to Claim 1 or 2, **characterized in that** the free protection zone (S, 1, 2, 3, 4) is placed so close to a delimiting contour of the work area (B) that a distance of no more than 10 cm remains between the free protection zone (S, 1, 2, 3, 4) and the delimiting contour.

4. Method according to any of Claims 1 to 3, **characterized in that** several free protection zones (S, 1, 2, 3, 4) are combined.

5. Method according to any of Claims 1 to 4, **characterized in that** the control system defines the intended, safe work area (B) by evaluating the sensor data.

6. Method according to any of Claims 1 to 5, **characterized in that** at least one sensor configured as a scanner scans the work environment (A).

7. Method according to Claim 6, **characterized in that** a laser scanner is used as the sensor.

8. Method according to any of Claims 1 to 7, **characterized in that** a mobile robotic vehicle, in particular an autonomous industrial truck, having at least one robot arm for load handling in a changing work environment (A) is used as the logistics robot, wherein the control system controls at least the robot arm.

9. Method according to any of Claims 1 to 8, **characterized in that** a non-safe control system is used as the control system, the control measures of the non-safe control system being monitored by the safety system.

10. Method according to any of Claims 1 to 8, **characterized in that** a safe control system is used as the control system, the safety system being integrated into the safe control system.

## Revendications

1. Procédé de sécurisation d'une zone de travail (B) d'un robot logistique mobile dans des environnements de travail (A) changeants, le robot logistique étant commandé par un système de commande, et l'environnement de travail (A) instantané étant détecté au moyen d'un système de capteur et étant surveillé par un système de sécurité, le système de commande définissant de manière autonome une zone de travail (B) sécurisée envisagée dans un nouvel environnement de travail (A), et le système de sécurité vérifiant et surveillant de manière autonome la zone de travail (B) définie en tant que champ de protection (S, 1, 2, 3, 4) dégagé, et en cas de violation du champ de protection liée à l'entrée d'un objet (O) dans le champ de protection (S, 1, 2, 3, 4) dégagé, le robot logistique étant placé automatiquement dans un état sécurisé, **caractérisé en ce que** le système de commande applique de manière itérative un ensemble prédéfini de champs de protection (S, 1, 2, 3, 4) à l'environnement de travail (A), l'algorithme suivant étant utilisé :
1) sélection d'un petit champ de protection i,
2) vérification par le système de sécurité du fait que le champ de protection i est ou non dégagé,
2a) en cas de vérification du fait que le champ de protection i est dégagé : poursuite à l'étape 3),
2b) en cas de vérification du fait que le champ de protection est occupé : abandon,
3) sélection d'un champ de protection i de taille immédiatement supérieure,
4) poursuite à l'étape 2),
5) définition du champ de protection le plus grand possible en tant que champ de protection i-1 vérifié en dernier en tant que champ de protection dégagé,
et **en ce que** le champ de protection (S, 1, 2, 3, 4) dégagé est placé suffisamment près d'un contour de délimitation de la zone de travail (B) pour qu'aucune personne ne puisse se trouver dans l'espace intermédiaire.

2. Procédé selon la revendication 1, **caractérisé en ce que** l'ensemble prédéfini de champs de protection (S, 1, 2, 3, 4) comprend des champs de protection rectangulaires (S, 1, 2, 3, 4).

3. Procédé selon la revendication 1 ou 2, **caractérisé en ce que** le champ de protection (S, 1, 2, 3, 4) dégagé est placé suffisamment près d'un contour de délimitation de la zone de travail (B) pour qu'une distance d'au plus 10 cm subsiste entre le champ de protection (S, 1, 2, 3, 4) dégagé et le contour de délimitation.

4. Procédé selon l'une quelconque des revendications 1 à 3 précédentes, **caractérisé en ce que** plusieurs champs de protection (S, 1, 2, 3, 4) dégagés sont combinés.

5. Procédé selon l'une quelconque des revendications 1 à 4, **caractérisé en ce que** le système de commande définit la zone de travail (B) sécurisée envisagée en évaluant les données de capteur.

6. Procédé selon l'une quelconque des revendications 1 à 5, **caractérisé en ce qu'**au moins un capteur conçu sous forme de dispositif de balayage balaye l'environnement de travail (A).

7. Procédé selon la revendication 6, **caractérisé en ce qu'**un dispositif de balayage laser est utilisé comme capteur.

8. Procédé selon l'une quelconque des revendications 1 à 7, **caractérisé en ce qu'**un véhicule robotique mobile, en particulier un chariot de manutention autonome, doté d'au moins un bras robotique pour la manipulation de charges dans un environnement de travail (A) changeant, est utilisé comme robot logistique, le système de commande commandant au moins le bras robotique.

9. Procédé selon l'une quelconque des revendications 1 à 8, **caractérisé en ce qu'**un système de commande non sécurisé dont les mesures de commande sont surveillées par le système de sécurité est utilisé comme système de commande.

10. Procédé selon l'une quelconque des revendications 1 à 8, **caractérisé en ce qu'**un système de commande sécurisé dans lequel le système de sécurité est intégré est utilisé comme système de commande.
